(19)

**Europäisches Patentamt**
**European Patent Office**
**Office européen des brevets**

(11) **EP 4 468 105 B1**

(12) **EUROPEAN PATENT SPECIFICATION**

(45) Date of publication and mention
of the grant of the patent:
**04.02.2026  Bulletin 2026/06**

(21) Application number: **24206323.8**

(22) Date of filing: **23.12.2022**

(51) International Patent Classification (IPC):
**B66F 9/06** *(2006.01)*     **G01C 21/00** *(2006.01)*
**G01S 17/42** *(2006.01)*    **G01S 17/58** *(2006.01)*
**G01S 17/86** *(2020.01)*    **G01S 17/931** *(2020.01)*
**G01S 7/48** *(2006.01)*     **B66F 9/075** *(2006.01)*
**G05D 1/246** *(2024.01)*    **G05D 1/667** *(2024.01)*
**G05D 105/28** *(2024.01)*   **G05D 111/10** *(2024.01)*
**G05D 111/50** *(2024.01)*   **G05D 107/70** *(2024.01)*
**G05D 109/10** *(2024.01)*   **G05D 1/242** *(2024.01)*
**G05D 1/243** *(2024.01)*

(52) Cooperative Patent Classification (CPC):
**B66F 9/063; B66F 9/0755; G01C 21/005;**
**G01S 7/4808; G01S 17/42; G01S 17/58;**
**G01S 17/86; G01S 17/931; G05D 1/242;**
**G05D 1/243; G05D 1/2465; G05D 1/667;**
G05D 2105/28; G05D 2107/70; G05D 2109/10;
(Cont.)

(54) **IMAGE AND RANGE SENSOR-BASED POSITION CONTROLLER AND ASSOCIATED METHOD**

AUF BILD- UND ENTFERNUNGSSENSOR BASIERENDE POSITIONSSTEUERUNG UND
ZUGEHÖRIGES VERFAHREN

CONTRÔLEUR DE POSITION BASÉ SUR UN CAPTEUR D'IMAGE ET DE DISTANCE ET PROCÉDÉ
ASSOCIÉ

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**

(43) Date of publication of application:
**27.11.2024  Bulletin 2024/48**

(60) Divisional application:
**25215874.6 / 4 671 900**

(62) Document number(s) of the earlier application(s) in
accordance with Art. 76 EPC:
**22216292.7 / 4 276 564**

(73) Proprietor: **Hiab AB**
**215 32 Malmö (SE)**

(72) Inventors:
 • **Vihonen, Juho**
  **36240 Kangasala (FI)**
 • **Raivio, Leevi**
  **33720 Tampere (FI)**

 • **Mäenpää, Pekka**
  **33720 Tampere (FI)**
 • **Sivananda, Krishnananda**
  **02150 Espoo (FI)**
 • **Aref, Mohammad M.**
  **33610 Tampere (FI)**

(74) Representative: **Papula Oy**
 **P.O. Box 981**
 **00101 Helsinki (FI)**

(56) References cited:
**US-A1- 2022 017 341**

 • **LI JING ET AL: "Building and optimization of 3D**
**semantic map based on Lidar and camera**
**fusion", NEUROCOMPUTING, ELSEVIER,**
**AMSTERDAM, NL, vol. 409, 18 June 2020**
**(2020-06-18), pages 394 - 407, XP086249270,**
**ISSN: 0925-2312, [retrieved on 20200618], DOI:**
**10.1016/J.NEUCOM.2020.06.004**

(52) Cooperative Patent Classification (CPC): (Cont.)
G05D 2111/10; G05D 2111/17

**Description**

**FIELD**

The present invention relates to localizing a load handling vehicle and a load target. Particular solutions pertaining to the present invention relate to guiding a load handling vehicle, such as a vehicle with a hook lift or a loader crane, to a load target.

**BACKGROUND**

Localization of targets in an uncertain or uncontrolled environment is a challenging task with applications in semi-autonomous and autonomous operation of load handling vehicles. A load handling vehicle distant from its target faces the problem of navigating safely to the target with a potentially large uncertainty in the position of the target. Providing improved localization capabilities has the potential to improve guiding of a load handling vehicle to the target.

US 2022/0017341 A1 discloses an autonomous robotic cargo system for moving and accurately positioning cargo inside an aircraft or at any other designated location in an austere environment. EP 3995925 A1 discloses an autonomous mobile robot having a driver, a first detector, a second detector, a localization estimation part, a route-generating part, and a control part. Li Jing et al (ISSN: 0925-2312) discloses building and optimization of 3D semantic map based on Lidar and camera fusion.

**SUMMARY**

An objective is to alleviate problems of localization for semi-autonomous or autonomous load handling.

According to a first aspect, a controller for localizing a load handling vehicle and a load target is provided. The controller can thus be provided as a load handling controller. The controller is arranged to obtain a spatial map describing a surrounding of the load handling vehicle. This allows the localization problem to be performed in a coordinate frame of the spatial map, instead of moving or otherwise uncertain coordinate frames. The controller can be further arranged to receive first sensor signals from a first sensor system for generating point clouds of the surrounding of the load handling vehicle and receive second sensor signals from a second sensor system for generating images of the surrounding of the load handling vehicle. The second sensor signals may be synchronized in time with the first sensor signals. This allows two separate sensor systems to provide time-synchronous data for localizing the load handling vehicle and the load target. The controller can then be arranged to localize the load handling vehicle and the load target in the spatial map based on the first sensor signals and the second sensor signals. The solution allows mitigating accumulation of errors, in particular in the presence of any uncertainties in the spatial map.

Thus, the controller, such as a load handling controller, for localizing a load handling vehicle and a load target may be arranged to obtain a spatial map describing a surrounding of the load handling vehicle, receive first sensor signals from a first sensor system for generating point clouds of the surrounding of the load handling vehicle, receive second sensor signals from a second sensor system for generating images of the surrounding of the load handling vehicle, wherein the second sensor signals are synchronized in time with the first sensor signals, and localizing the load handling vehicle and the load target in the spatial map based on the first sensor signals and the second sensor signals.

The controller is arranged to repeatedly update with a first frequency the position of the load handling vehicle based on the third sensor signals and repeatedly update with a second frequency the path based on the position of the load handling vehicle, wherein the first frequency is equal to or larger than the second frequency. This allows smooth control where the load handling vehicle in time-critical control is guided towards the path and large changes to the path can be minimized.

In an embodiment, the load handling vehicle is localized in the spatial map based on the first sensor signals and the load target is localized in the spatial map based on the first sensor signals and the second sensor signals.

In an embodiment, localizing the load handling vehicle comprises fitting one or more first point clouds of the surrounding of the load handling vehicle obtained from the first sensor signals to the spatial map to determine the position of the load handling vehicle in the spatial map.

In an embodiment, localizing the load target in the spatial map comprises identifying the load target based on one or more images of the surrounding of the load handling vehicle generated by the second sensor system to obtain an identified load target on an identification image of the one or more images. Localizing the load target in the spatial map may then further comprise determining the position of the load target in the spatial map by projecting one or more second point clouds of the surrounding of the load handling vehicle obtained from the first sensor signals to the identification image, the one or more second point clouds being synchronized in time with respect to the one or more images.

In an embodiment, the one or more first point clouds comprise or are synchronized in time with the one or more second point clouds.

In an embodiment, identifying the load target comprises providing an image region outlining the identified load target in the identification image and the one or more second point clouds are projected to the identification image to determine points of the one or more second point clouds corresponding to the identified load target within the identification image.

In an embodiment, the controller is arranged to plan a path for the load handling vehicle from the position of the load handling vehicle in the spatial map to the position of the load target in the spatial map. The controller can be further arranged to determine a trajectory data set for directing the load handling vehicle along the path towards the load target for loading and/or unloading at the load target. In particular, the path may comprise one or more parametric curves, such as Bezier paths/curves.

In an embodiment, the controller is arranged to cause the trajectory data set to be transmitted over a trajectory interface to a control unit arranged to generate driving instructions for the load handling vehicle based on the trajectory data set.

In an embodiment, the trajectory data set comprises an indication of direction and an indication of speed for the load handling vehicle along the path.

In an embodiment, the controller is arranged to repeatedly update the spatial map based on the first sensor signals.

In an embodiment, the controller is arranged to repeatedly update the position of the load target and/or the load handling vehicle in the spatial map based on the first sensor signals.

In an embodiment, the controller is arranged to receive third sensor signals from a third sensor system monitoring a state of the load handling vehicle and localize the load handling vehicle in the spatial map by first determining an initial position of the load handling vehicle based on the first sensor signals and then updating the initial position based on the third sensor signals. This allows the controller to keep updating the position of the load handling vehicle even when the first sensor system does not provide information, for example due to a malfunction or a view of the first sensor system being temporarily occluded. In addition, it facilitates time critical control with the third sensor system. Similarly, this allows the controller to keep updating the position of the load target in the spatial map even when the first sensor system does not provide information, which can happen temporarily.

In an embodiment, the controller is arranged to repeatedly update with a first frequency the position of the load handling vehicle based on the third sensor signals, wherein the first frequency is larger than the frequency with which the first sensor system provides the first sensor signals for generating point clouds of the surrounding of the load handling vehicle. This allows the third sensor system to provide improved responsivity with a larger operating frequency in comparison to the point-cloud providing first sensor system.

In an embodiment, the controller is arranged to estimate speed and/or velocity of the load handling vehicle based on the first sensor signals and to localize the load handling vehicle in the spatial map based on the speed and/or velocity estimated.

In an embodiment, the controller is arranged to store the spatial map into a memory to be activated when the load handling vehicle arrives at the surrounding described by the spatial map.

Localizing the load handling vehicle may comprise or consist of determining a position and/or an orientation of the load handling vehicle in the spatial map. Localizing the load target may comprise or consist of determining a position and/or an orientation of the load target in the spatial map. In an embodiment, localizing the load handling vehicle and the load target comprises determining an orientation of the load handling vehicle and an orientation of the load target in the spatial map. This facilitates controlling the load handling vehicle so that its orientation can be aligned with the orientation of the load target for loading and/or unloading. In general, any reference to position herein may be supplemented by a reference to orientation, so that for example any reference to determining position may be interpreted as a reference to determining both position and orientation. This applies equally to references to any position of the load handling vehicle and to any position of the load target. In other words, any reference to position may be replaced by a reference to pose with pose indication both position and orientation, thus comprising translational and/or rotational information.

According to a second aspect, a working equipment assembly for a load handling vehicle is provided. The working equipment assembly comprises the controller according to the first aspect or any of its embodiments. The working equipment assembly may also comprise the first sensor system arranged to monitor a surrounding of the load handling vehicle and/or the second sensor system arranged to monitor the surrounding of the load handling vehicle. The working equipment assembly may comprise one or more movable working equipment actuators arranged to facilitate loading and/or unloading of the load handling vehicle. The working equipment assembly may further comprise a working equipment controller arranged to control movement of the working equipment actuators during the loading and/or the unloading.

According to a second aspect, a method for localizing a load handling vehicle and a load target is provided. The method comprises obtaining a spatial map describing a surrounding of the load handling vehicle. The method can comprise receiving first sensor signals from a first sensor system for generating point clouds of the surrounding of the load handling vehicle and receiving second sensor signals from a second sensor system for generating images of the surrounding of the load handling vehicle. The second sensor signals may be synchronized in time with the first sensor signals. The method can then further comprise localizing the load handling vehicle and the load target in the spatial map based on the first sensor signals and the second sensor signals. Any features described with reference to the embodiments of the first aspect are applicable also in connection of the method of the second aspect.

Thus, the method for localizing a load handling vehicle and a load target may comprise obtaining a spatial map describing a surrounding of the load handling vehicle, receiving first sensor signals from a first sensor system for generating point clouds of the surrounding of the load handling vehicle, receiving second sensor signals from a second sensor system for generating images of the surrounding of the load handling vehicle, wherein the second sensor signals are synchronized in time with the first sensor signals, and localizing the load handling vehicle and the load target in the spatial map based on the first sensor signals and the second sensor signals.

The method comprises repeatedly updating with a first frequency the position of the load handling vehicle based on the third sensor signals and repeatedly updating with a second frequency the path based on the position of the load handling vehicle, wherein the first frequency is equal to or larger than the second frequency. This allows smooth control where the load handling vehicle in time-critical control is guided towards the path and large changes to the path can be minimized.

According to a fourth aspect, a computer program product comprises instructions which, when executed by a computer, cause the computer to carry out the method according to the third aspect or any of its embodiments.

The disclosed solutions allow also addressing the challenge of "single point failures" by facilitating planning and executing continuous and well-behaved trajectories even in the presence of exteroceptive perception failures or considerable range-dependent uncertainties. The solutions may also be provided substantially independent of the characteristics of the load (e.g. container) or the load handling vehicle, thereby allowing them to be utilized without specific load or vehicle requirements. The solutions facilitate control, e.g. as remote control, of operation of a load-handling vehicle with a minimized data exchange, and even autonomous operations. By facilitating improved monitoring of the surrounding of the load handling vehicle and, optionally improved path planning, the solutions can improve productivity and reduce the human element for operating the load handling vehicle, thus also reducing potentially high requirements for driver skill.

In addition to advantages in terms of improved productivity and ease of use or operation, the disclosed solutions can further improve the safety in the surrounding of the load handling and/or for a driver of the load handling vehicle. As an example, the disclosed solutions can enable the driver to supervise the localization and guiding of the load handling vehicle towards the target remotely or from a cabin of the vehicle without the need for assistance from a colleague outside the vehicle or the need to leave the cabin him- or herself in a semi-autonomous application of the solutions.

It is to be understood that the aspects and embodiments described above may be used in any combination with each other. Several of the aspects and embodiments may be combined together to form a further embodiment of the invention.

## BRIEF DESCRIPTION OF THE DRAWINGS

The accompanying drawings, which are included to provide a further understanding and constitute a part of this specification, illustrate examples and together with the description help to explain the principles of the disclosure. In the drawings:

Fig. 1 schematically illustrates a vehicle with a controller according to an example,
Fig. 2 illustrates a method according to an example,
Fig. 3 illustrates an example of localizing the vehicle and the load target,
Fig. 4 illustrates an example of path planning for loading and/or unloading,
Fig. 5 illustrates and example of trajectory deviation, and
**Fig. 6** illustrates an example of dataflow and modules for the solution.

Like references are used to designate equivalent or at least functionally equivalent parts in the accompanying drawings.

## DETAILED DESCRIPTION

The detailed description provided below in connection with the appended drawings is intended as a description of examples and is not intended to represent the only forms in which the example may be constructed or utilized. However, the same or equivalent functions and structures may be accomplished by different examples.

The presently disclosed solutions may be used for mobile manipulation, in particular for load handling. In particular, they may be utilized for any of user-assisted, teleoperated and autonomous load handling.

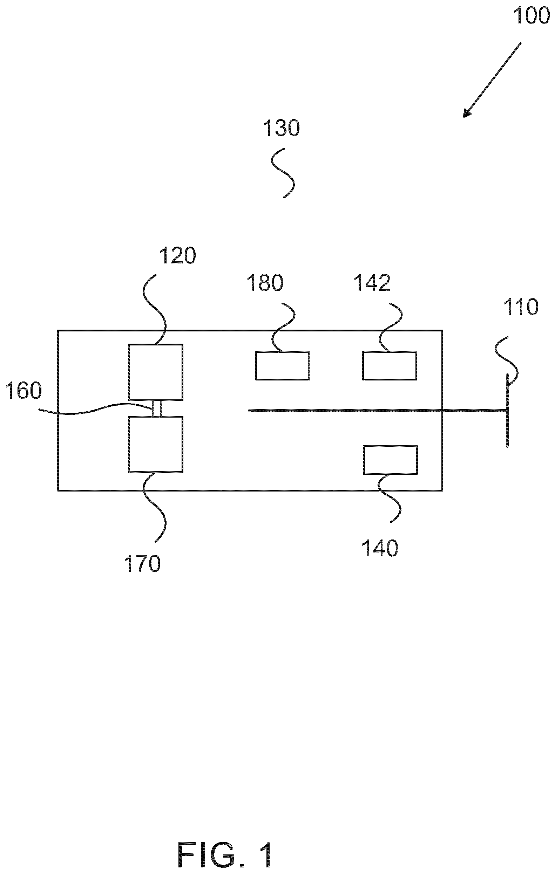

Fig. 1 shows a schematic example of a vehicle 100, such as a load handling vehicle, for which the present solutions may be utilized. The vehicle may be a freely moving vehicle, in which case it can face various navigational challenges from collision avoidance to target localization. It may be arranged for free movement in two-dimensions, e.g. on paved or unpaved ground. The vehicle may be a wheeled vehicle, which can provide freedom of movement over a working surface. The vehicle may be autonomous or semi-autonomous vehicle. For example, the vehicle may be arranged to move autonomously, while manual braking may still be facilitated to allow a user monitoring the operation of the vehicle to slow and/or stop the vehicle. The vehicle may be a by-wired vehicle. As an example, the vehicle may be a truck.

The vehicle may be equipped with one or more working units 110 (which may also be referred to as pieces of working equipment). The working unit(s) may comprise one or more movable working equipment actuators arranged to facilitate loading and/or unloading of the vehicle. The working unit(s) may comprise a crane (e.g. a loader crane) and/or a hook lift (also called a demountable. With the working unit(s) mounted on a vehicle, the vehicle may be arranged to load and/or unload objects such as containers, e.g. flat-beds or dumpster bodies. The objects may herein be referred to as load targets or simply loads. The load target(s) can refer to the object for loading or the space thereof. It can also refer to a space for unloading, which may be empty. The vehicle may be arranged for various applications such as transportation, waste handling or construction.

As the working units are mounted on a movable vehicle, the position and/or orientation of the working unit relative to the load target may vary depending on the position and/or orientation of the vehicle. For optimizing workflow, the vehicle position and/or orientation relative to the load target may often need to be adjusted. Such an adjustment may also be dependent on the surrounding of the vehicle, for example to avoid collision.

The orientation of the vehicle may comprise one or more orientation components of the vehicle, in particular its one-, two- and/or three-dimensional orientation on its working surface. Similarly, the orientation of the load target may comprise one or more orientation components of the load target, in particular its one-, two- and/or three-dimensional orientation on said working surface. The orientation of the vehicle may thus comprise the roll and/or pitch vehicle. Similarly, the orientation of the load target may comprise the roll and/or pitch load target, for example in relation to the vehicle. The load targets don't always lie on a flat surface. On the other hand, the orientation of the load target may comprise or consist of the yaw angle (or compass heading) of the load target, for example with respect to the vehicle.

In a first example, the vehicle has a necessary safety compliance for autonomous or semi-autonomous load handling. In that case, a driver (onboard or offboard) may oversee the operation of the vehicle and the working unit(s). The vehicle may be equipped with a safety-rated braking system (e.g. SAE L3, L4 or L5 autonomy) for the driver to use. In a second example, the vehicle is reliable but does not have the necessary safety compliance for autonomous load handling. In such a case, the vehicle may be configured for a supervisor to initiate the operation of the working unit(s), allowing the supervisor to guide and monitor the system. The supervisor can then responsible for exception handling (e.g. SAE L2 - L3 autonomy).

The disclosed solutions, including a controller and a method, as described hereafter, may be arranged for load position and/or orientation estimation. The load for the loading and/or unloading as described herein may be, in particular, a container, such as an intermodal container or a flatrack container. The container may be a ISO container. The load may comprise a grappling interface for the working unit(s), such as a hook handle, for loading and/or unloading the load to the vehicle. For example, the load target may comprise one or more flatracks equipped with a suitable bail bar. Additionally, the solutions may be arranged for simultaneous trajectory planning for automated/autonomous operation of the vehicle. Such solutions for simultaneous localization and planning can facilitate improved autonomous or semi-autonomous operation particularly for load handling as the trajectory can be continuously updated with updated localization information. The solutions may be provided also as vehicle agnostic solutions, allowing the solutions to be utilized with no special requirements for the vehicle, for example in pre-existing vehicles as a retrofit.

A controller 120, such as a load handling controller, may be provided for localizing the vehicle and/or the load target. The controller may comprise one or more processors and one or more memories. The memories may comprise instructions which, when run by the processor(s) cause the controller to perform any of the acts described herein for the controller. The controller may be arranged to be mounted to the vehicle for operation. For example, it may be included as part of a working equipment assembly arranged to be mounted to the vehicle for operation. Alternatively or additionally, the controller may be arranged to operate with remote connection to the vehicle, in which case the vehicle can comprise a receiver and/or a transmitter-receiver for communicating with the controller. In general, the vehicle may comprise a receiver and/or a transmitter (both options including the possibility also for a transmitter-receiver) coupled to the controller for providing instructions to the controller and/or facilitating transmission of information, such as status information, from the controller. The controller may also be a distributed controller. The controller may also comprise or be coupled to a user interface for allowing a user to input information to the controller and/or receive information from the controller. The user interface may comprise a display, such as a touch screen. The user interface may be integrated on-board or separate from the vehicle or it may be a distributed user interface with some components integrated on-board the vehicle.

The controller 120 can be arranged to obtain a spatial map describing a surrounding of the vehicle. The spatial map may be obtained by the controller itself generating or facilitating the generation of the map. It may also be obtained as a pre-generated map received by the controller, for example through the receiver. The controller may be arranged to store the spatial map into the one or more memories. The controller may be arranged to activate a pre-generated spatial map when the vehicle arrives (e.g. re-arrives) at the surrounding described by the spatial map.

The spatial map describes a surrounding 130 of the vehicle. The surrounding may comprise one or more landmarks, such as obstacles. These may include other vehicles, buildings, containers etc. The surrounding may also comprise the load target. The spatial map may be a two or three dimensional map. It may have a coordinate system, which may be fixed. This allows providing a frame of reference, which may be stationary. Using such a spatial map allows mitigating the effect of noise in localization, in particular for the vehicle and/or the load target. The spatial map may comprise points of the surrounding represented in the coordinate system of the spatial map. As such, it may be provided as a point cloud with coordinates. It may also comprise the landmark(s) with their corresponding coordinates. The controller may be arranged to facilitate visible output of the spatial map, for example on the display.

Any of the point cloud(s) referred herein may be provided as a discrete set of data points in space, in particular in two-dimensional space and/or three-dimensional space. The point cloud may include a coordinate, such as a Cartesian coordinate, for each data point in the point cloud. The point cloud(s) may represent the shape of one or more objects in the surrounding of the vehicle. The point cloud(s) may comprise raw data point cloud(s) obtained as a sensor output of a point-cloud generating system such as the first sensor system and/or conditioned point cloud(s) obtained after one or more raw data point cloud(s) obtained as a sensor output has been conditioned, for example by the first sensor system and/or the controller. The conditioning may involve, for example, removing points representing the working surface, such as the ground, from the point cloud(s). The point cloud(s) may also be provided in accordance with any of the methods available to a person skilled in the art and they are to be contrasted with images, which are composed in markedly distinct manner, e.g. from pixels. The point cloud(s) may be produced by one or more scanners, in contrast to images produced with cameras. The point cloud(s) may comprise plain point cloud(s) and/or point cloud(s) embedded into a mesh such as a triangle mesh or polygon mesh.

The vehicle 100 may comprise a first sensor system 140 for generating point clouds of the surrounding 130 of the vehicle. For this purpose, the first sensor system may comprise one or more LiDARs. Alternatively or additionally, the first sensor system may comprise one or more radars and/or time-of-flight cameras for generating the point clouds. The first sensor system may also comprise one or more RGB-D cameras. The first sensor may be arranged for providing two-dimensional and/or three-dimensional point clouds. The vehicle may also comprise a second sensor system 142 for generating images of the surrounding 130 of the vehicle. For this purpose, the first sensor system may comprise one or more cameras, such as RGB cameras. The camera(s) allow providing color and/or bearing measurements, which may be converted to a quantized indication, such as a pixelized view, of the surrounding, which may be used for identification of the load target and/or any other objects in the surrounding. Intrinsic parameters can be used to correct biases in the camera measurements. The camera(s) may be color imaging camera(s). The camera(s) and/or the controller(s) may be configured for providing machine-readable data matrices for automated identification of a target and/or human-readable images for interacting with an on-board/off-board human operator. In particular, cameras with a resolution of 2-megapixels or higher may be utilized. Also optical filters e.g. IRIS can be utilized to generate lucid images of the surrounding in an outdoor environment. The cameras may be arranged for operation under direct sunlight. The second sensor system may have a set of intrinsic parameters, such as optical center, focal length, and radial and tangential lens distortion. The controller may be arranged to utilize the information of the intrinsic parameters for processing the second sensor signals to localize the vehicle and/or the load target.

The solution allows in particular combining in an improved manner the benefits of a LiDAR with those of a camera. The first and/or the second sensor system may be arranged to be mounted on the vehicle so as to allow navigation, e.g. autonomous navigation, of the vehicle based on sensor signals provided by the sensor system(s). The first sensor system may be oriented along the longitudinal axis of the working unit(s), such as a hooklift, for generating the point clouds. The second sensor system may be oriented along the longitudinal axis of the working unit(s), such as a hooklift, for generating the images. The first sensor system and/or the second sensor system may be provided as a matrix comprising multiple sensors, e.g. as a 3-by-4 matrix. The first and second sensor system may have at least partially overlapping fields of view. The first sensor system and/or the second sensor system may be arranged for mounting to the vehicle and/or the working unit(s) so as to enable for the sensor system(s) to be directed in a fixed direction with reference to the vehicle and/or the working unit(s). Alternatively, an adjustable mounting may be provided to allow for the direction of the sensor system(s) to be adapted during use, e.g. based on the application.

The controller 120 may be arranged to receive first sensor signals from the first sensor system for generating point clouds of the surrounding of the vehicle and/or receiving second sensor signals from the second sensor system for generating images of the surrounding of the vehicle. The second sensor signals may be synchronized in time with the first sensor signals, allowing the input from the first sensor system and the second sensor system to be coordinated in time. For this purpose, the first sensor system and the second sensor system may have built-in synchronization electronics. Any image provided by the second sensor system may thus be associated with a point cloud provided by the first sensor system, where the image and the point cloud may correspond to the surrounding at the same instant of time. The controller may be arranged to perform such an association.

The controller 120 may be arranged to localize the vehicle in the spatial map based on the first sensor signals. This may be done exclusive based on the first sensor signals or including, for example, information from the second signals. Localizing the vehicle may comprise or consist of determining the position and/or orientation of the vehicle in the spatial map. Localizing the vehicle may comprise determining one or more coordinates for the vehicle in the coordinate system of the spatial map.

The controller 120 may be arranged to localize the load target in the spatial map based on the first sensor signals and the second sensor signals. This may be done exclusive based on the first sensor signals and the second sensor signals but also additional information may be used. Localizing the load target may comprise or consist of determining the position and/or orientation of the load target in the spatial map. Localizing the load target may comprise determining one or more coordinates for the load target in the coordinate system of the spatial map.

Localizing the vehicle 100 in the spatial map may comprise fitting one or more (first) point clouds of the surrounding 130 of the vehicle obtained from the first sensor signals to the spatial map to determine the position and/or orientation of the vehicle in the spatial map. The fitting may be performed by any suitable fitting method available to a person skilled in the art.

Localizing the load target in the spatial map may comprise identifying the load target based on one or more images of the surrounding of the vehicle generated by the second sensor system. This allows obtaining an identified load target on an identification image. The identification may be performed automatically. For this purpose, the controller may be arranged for object recognition, where any suitable such object recognition method available to a person skilled in the art may be used. "Object recognition" as referred throughout the disclosure may be performed to address the pattern and/or shape of the points in space, e.g. two- and/or three-dimensional space, for object classification. In particular, "object recognition" as referred throughout this disclosure may be or involve image-based object recognition. We note that any reference to object recognition in the present disclosure may also include detection and/or classification. The identification may also be performed manually, for example through the user interface. The controller may be arranged to facilitate visible outputting for the one or more images, for example through the user interface, e.g. on the display, based on which a user may identify the load target from the one or more images for the controller. Localizing the load target in the spatial map may further comprise determining the position and/or orientation of the load target in the spatial map. This can be done, for example, by projecting one or more (second) point clouds of the surrounding of the vehicle obtained from the first sensor signals to the identification image. In particular, the projection may be performed as a rigid body transformation for the two sensor systems: the first sensor system with respect to the second sensor system. The one or more (second) point clouds may be synchronized in time with respect to the one or more images. Also, the one or more first point clouds may comprise or be synchronized in time with the one or more second point clouds.

The load target may be identified using one or more image regions outlining the identified load target. The outlining may be coarse, e.g. by a bounding box, or it may follow contours of the load target. The image region(s) may be provided in the identification image automatically or manually, for example through the user interface, e.g. the display. The one or more second point clouds can then be projected to the identification image to determine points of the one or more second point clouds corresponding to the identified load target within the image region.

As such, the approach allows not only automated but alternatively or additionally also manual load target recognition in an interactive manner, for example by using a touch screen.

The controller may be arranged for path planning for the vehicle based on the localization of the vehicle and/or the load target. In particular, the controller may thus be arranged for planning a path for the vehicle from the position and/or orientation of the vehicle in the spatial map to the position and/or orientation of the load target in the spatial map. Here, planning the path to the orientation of the load target may correspond to planning the path so that the orientation of the vehicle and/or its working unit(s) assume an orientation for loading and/or unloading at the load target, thereby allowing the vehicle to be immediately used for loading and/or unloading at the load target. In particular, the path may be planned as an obstacle-free path for the vehicle.

The controller may be arranged to plan a path where the vehicle aligns with the load target for loading and/or unloading. As an example, the controller may be arranged to plan a path where the vehicle backs to the load target for loading and/or unloading, e.g. for allowing the working unit(s) to engage the load. For a drop-off operation, the controller may be arranged to plan a path where the vehicle is aligned to drop the load to an obstacle-free space. In both cases, the controller may be arranged to plan the path utilizing information of the working unit(s), such as their position at the vehicle, maneuverability and/or range of operation.

The controller may also be further arranged to determine a trajectory data set for directing the vehicle along the path towards the load target for loading and/or unloading at the load target. The controller can be arranged to cause the trajectory data set to be transmitted over a trajectory interface 160 to a control unit 170 arranged to generate driving instructions for the vehicle based on the trajectory data set. The control unit may be mounted on the vehicle. Mounting the controller also to the vehicle allows the trajectory data to be transmitted across the trajectory interface reliably and fast. The trajectory data set may comprise one or more indications of direction and/or speed for the vehicle along the path. In particular, it may comprise a sequence of such indications along the path, allowing the vehicle to change direction and/or speed along the path until it arrives at the load target, optionally with an orientation aligned with the load target for loading and/or unloading. The one or more indications of direction may comprise, for example, a steering angle of the vehicle and/or a change thereof.

As the spatial map may be generated based on the sensor signals, it may be noisy. In any case, it may change in time, for example due to it comprising one or more movable obstacles. The controller may thus be arranged to repeatedly update the spatial map based on the first sensor signals. Similarly, the controller may be arranged to repeatedly update the position and/or orientation of the load target and/or the vehicle in the spatial map based on the first sensor signals. In both cases, the noise in the spatial map may be reduced, in particular for targets closer to the vehicle. The controller may be arranged to update the spatial map with a fixed frequency and/or with some other criteria.

The controller may be arranged to receive third sensor signals from a third sensor system 180 monitoring a state of the vehicle. This state may be an internal state of the vehicle, which may comprise, for example, the speed and/or pose (i.e. position and/or orientation) of the vehicle. On the other hand, the internal state may comprise a displacement and/or one or more indications of orientation of the vehicle, such as a heading of the vehicle, a change of the heading of the vehicle, a steering angle of the vehicle or a change of the steering angle of the vehicle. The third sensor signals may have an incremental behavior and indicate short-term changes in the motion of the vehicle and/or stoppage of the vehicle. The controller may then be arranged to localize the vehicle in the spatial map utilizing the third sensor signals as supplementary information. In particular, this can be done by first determining an initial position and/or initial orientation of the load handling vehicle based on the first sensor signals and then updating and/or validating the initial position and/or initial orientation based on the third sensor signals allowing updates also when the first sensor system is not available or would react too slowly, thereby facilitating time-critical control, in particular in a smooth manner. The controller is arranged to repeatedly update, with a first frequency, the position and, optionally, orientation of the vehicle based on the third sensor signals. It is also arranged to repeatedly update, with a second frequency, the aforementioned path based on the position and, optionally, orientation of the vehicle. The first frequency is equal with the second frequency or, for example for improved responsivity, larger, for example at least twice as large. The controller may then be arranged to provide the trajectory data set before the path is updated so that the course of the vehicle may be corrected towards the path before it is updated. Alternatively or additionally, the first frequency may be larger than, for example at least twice as large, a third frequency with which the first sensor system provides the first sensor signals for generating point clouds of the surrounding of the vehicle. In particular, this may be utilized for time-critical responsivity or operation when the first signals from the first sensor system are temporarily not available, e.g. due to malfunction, occlusion and/or communication or process delay. The third frequency may be smaller than, equal to or larger than the second frequency.

What is achieved with the third sensor system, as described above, may also be achieved with the first sensor system, when the first sensor system facilitates Doppler-based velocity estimation. For example, the first sensor system may comprise or consist of a frequency-modulated continuous wave (FMCW) LiDAR for this purpose. The controller can be arranged to estimate speed and/or velocity of the vehicle based on the first sensor signals with any such first sensor system. It may also be arranged to localize the vehicle in the spatial map based on the speed and/or velocity estimated, for example by updating the initial position and/or initial orientation as described above. Using such velocity estimation allows providing the functionality without other sensors such as odometers, which may be prone to a tedious retrofit, for example of hall-effect encoders, which may be subject to wear and tear, particularly in the heavy-duty domain.

The controller may comprise an object recognition system for identifying the load target and/or any objects in the surrounding of the vehicle. As one alternative, the object recognition system may also be provided separate from the controller and it may be coupled to the controller for the identification.

A working equipment assembly 190 for a vehicle, such as a load handling vehicle or the vehicle described in any of the examples herein, may be provided. The working equipment assembly comprises the one or more working unis 110. It may also comprise the controller 120 as described herein. The working equipment assembly may also comprise the first sensor system 140 arranged to monitor the surrounding of the vehicle and/or the second sensor system 142 arranged to monitor the surrounding of the vehicle 100. Similarly, it may comprise the third sensor system 180 arranged to monitor the state of the vehicle. The working equipment assembly may further comprise a working equipment controller arranged to control movement of the working unit(s), such as the movable working equipment actuator(s) as described above, during the loading and/or the unloading.

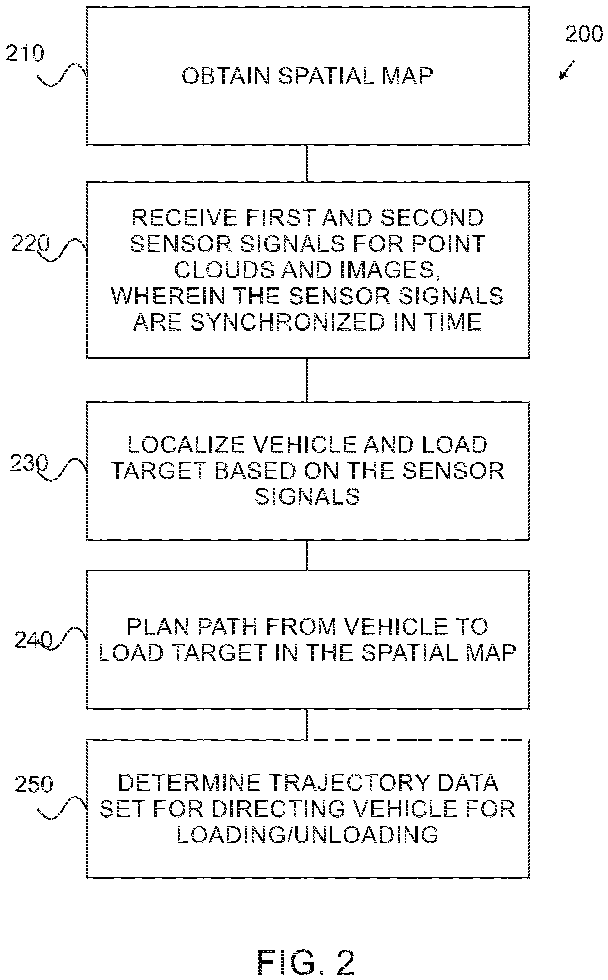

Fig. 2 shows an example of a method 200. The method comprises several parts which may be performed independently from each other and/or in any order. The method can be used for localizing a vehicle, such as a load handling vehicle or the vehicle described in any of the examples herein, and the load target. Also, parts 210, 220 and 230 described in the following, in particular in that order, may be used for the method for localizing the vehicle and the load target. Any of features described with reference to the vehicle 100 are applicable also in connection of the method 200 and any parts of it.

The method may comprise obtaining 210, e.g. generating or receiving as described above, a spatial map describing a surrounding of the vehicle. The method may comprise receiving 220 first sensor signals from a first sensor system for generating point clouds of the surrounding of the vehicle and/or receiving second sensor signals from a second sensor system for generating images of the surrounding of the vehicle. The second sensor signals may be synchronized in time with the first sensor signals. The method may also comprise localizing 230 the vehicle and the load target in the spatial map based on the first sensor signals and the second sensor signals, for example in any of the ways described above. The method may comprise planning 240 a path for the vehicle from the position and/or orientation of the vehicle in the spatial map to the position and/or orientation of the load target in the spatial map. The method may comprise determining 250 a trajectory data set for directing the vehicle along the path towards the load target for loading and/or unloading at the load target. The method may be performed in a cyclic manner.

The disclosed solutions may be arranged for a continuous decision-making process for controlling the vehicle operating under uncertainty and large localization errors. This can allow driver-assisted automated and autonomous operation of the vehicle and its working unit(s). No off-board infrastructure to support the sustained function is necessarily required, i.e. any or all of the disclosed features may be arranged to be provided on-board the vehicle.

The first and the second sensor system can be solely used to detect, classify and range objects (e.g. humans or containers). This can be done in three dimensions for a low cost. Absolute positioning means, such as satellite navigation systems, may be optionally used to supplement the localization but it is noted that the present solution importantly allows localization in the spatial map and within its own coordinate system.

The vehicle and the load target may be localized, for example, by solving the point cloud registration problem with the Iterative Closest Point (ICP) algorithm. As a particular example, the vehicle and the load target may be localized by a point-to-point variant of the Levenberg-Marquardt algorithm (LMA). This can be motivated by M-estimators and robust loss functions for outlier filtering. As an example, the algebraic localization and load pose outputs from the LMA may be fused with ego-motion state of the vehicle, for example by a robust Kalman filter (KF) for continuous, high bandwidth estimates, which are suited for closed-loop control. This can be again motivated by the M-estimators and robust statistics.

For the path planning, a path as a parametric curve, in particular a Bezier path/curve, may be planned to the load target using the aforementioned position estimates. This allows the vehicle, and its working unit(s) to smoothly approach and latch onto the load while minimizing any misalignment. The path may be translated to a local trajectory, which can be cyclically planned, for example in the Frenet frame, for both time-synchronous coordinated control and reactive obstacle avoidance benefits. The local trajectory can be provided to describe the desired, kinematically feasible motion states in future, e.g. by some seconds, for high bandwidth feed-forward control of the working unit(s) of the vehicle, such as the actuator(s) (e.g. to a desired curvature, desired brake deceleration or desired drive torque).

As an example, the solutions may be provided on a model-based design (MBD) toolchain for broad compliance with on-board computer hardware and high-integrity software standards, such as ISO 26262 and IEC 61508, allowing mixed-mode offering.

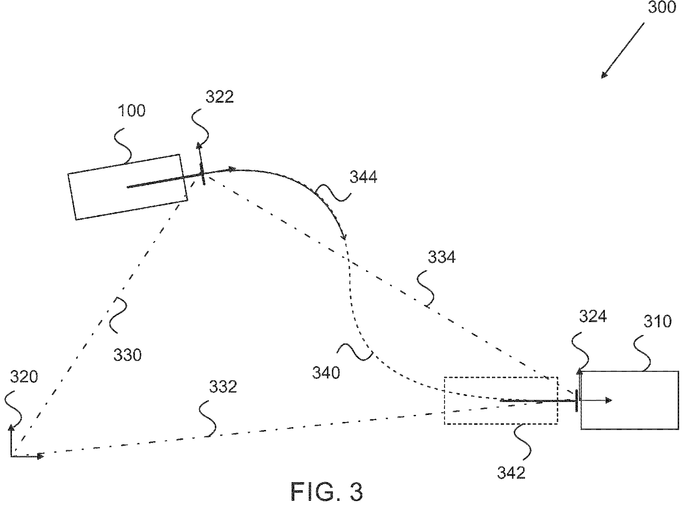

Fig. 3 shows an example localizing 300 the vehicle 100 and the load target 310, such as a container. In particular the pose (i.e. position and/or orientation) of the vehicle and/or the load target may be determined. This can be done, e.g. by the controller, as soon as sensory information is available, e.g. from the first and the second sensor system. Already before the next cycle of measurement by the first sensor system, the path from the vehicle towards the load target may be planned. The path is planned in the spatial map so it need not be based on the absolute position or orientation of the vehicle or the load target. Instead, the solutions allow path planning from the best-known position and/or orientation of the vehicle towards the best-known position and/or orientation of the load target. The path can be planned while the vehicle is driving. The path can be planned even while the vehicle is not exactly on the path. The path can be planned to guarantee the smoothness of the path while the controller attempts to keep the vehicle on the path and correct for disturbance from unknown vehicle and environment properties. The solution allows improved smoothness and continuity in the path and corresponding trajectory for the vehicle, thereby allowing drive control for the vehicle in real-time, in particular for by-wire vehicles. This can be done despite considerably large changes in updated sensory data.

The localization can be viewed in terms of three coordinate frames: a map frame 320, a vehicle frame 322 and a load target frame 324. The map frame is a coordinate frame for the spatial map, e.g. a Cartesian coordinate frame. While the vehicle frame may be centered in any location at the vehicle, e.g. at an origin of the first sensor system or at an origin of the working unit(s) (where the origin may be located at the position where the measurement or work is conducted from), the vehicle frame still moves with the vehicle 100. In contrast, the map frame may correspond to a substantially stationary ground truth, even if it is repeatedly updated due to the spatial map being updated, e.g. as the first control system provides further information of the surrounding of the vehicle to the controller. This allows the controller to stabilize the operation of the vehicle. As an example, position and/or orientation of the vehicle may be estimated 330 within the map frame. Similarly, position and/or orientation of the load target may be estimated 332 within the map frame. However, position and/or orientation of the load target may also be estimated 334 in relative manner, for example within the vehicle frame. In the spatial map, the path 340 from the position and/or orientation of the vehicle to the position and/or orientation of the load target may be planned. Accordingly, the controller may be arranged to plan the path for the vehicle to arrive at the load target with a final position and/or orientation 342 to align with the load target for loading and/or unloading. The path may be repeatedly updated, even when the vehicle moves. The controller may provide a trajectory data set for a trajectory 344 of the vehicle to follow the path (illustrated in Fig. 3 as a solid line overlapping the dashed line of the path). The trajectory data set may be provided to a control unit of the vehicle for controlling the movement of the vehicle along the path, for example through the trajectory interface.

As indicated above, the third sensor system may also be utilized for planning the path. In particular, the controller may be arranged to utilize the third sensor signals from the third sensor system for guiding the vehicle towards the path. The third sensor signals may be utilized to localize the vehicle when the first sensor signals are not available and/or with a greater frequency than the localization of the vehicle based on the first sensor signals. The path therefore does not need to be continuously updated but the third sensor signals may be utilized to return the vehicle towards the path when the vehicle strays from the path. This also allows mitigating fluctuations in control of the vehicle due to uncertainty in the measurement results of the sensor systems. The controller may track trajectory by correcting errors caused by noisy sensor outputs. The path may be updated with a frequency smaller than the trajectory, in which case the path and the trajectory may deviate from each other, in particular for obstacle avoidance. Based on the third sensor signals, the controller may be arranged to generate a local trajectory data set for returning the vehicle to the path. This may be provided as an update to the trajectory data set and transmitted over the trajectory interface to the control unit of the vehicle.

The third sensor system may comprise a vehicle motion state sensor, e.g. a vehicle speed sensor, such as an odometer. This allows the third sensor signals to comprise a vehicle motion state, such as speed, for determining the position and/or orientation of the vehicle, e.g. by incremental changes to the position and/or orientation of the vehicle. This may be done, for example, by updating the initial position and/or orientation based on the vehicle motion state, such as speed and/or steering angle. As indicated above, the vehicle motion state for such a purpose may also be obtained from a FMCW LiDAR, such as a 4D coherent FMCW LiDAR. Such a system allows obtaining the vehicle motion state with a fixed sample time. Similarly, the third sensor system may comprise a vehicle heading and/or heading rate sensor, such as a gyroscope and/or an inertial navigation system (INS). This allows the third sensor signals to comprise the vehicle heading and/or heading rate for determining the orientation of the vehicle, e.g. by updating the initial orientation based on the vehicle heading and/or heading rate. The vehicle heading and/or heading rate for such a purpose may also be obtained from the FMCW LiDAR. The vehicle heading and/or heading rate may be obtained with a fixed sample time.

For localization, e.g. of the vehicle 100 and/or the load target 310 but also of any other objects in the surrounding 130, the controller may be arranged to perform a fitting of one or more first point clouds of the surrounding of the vehicle obtained from the first sensor signals to the spatial map. For the fitting, a transformation such as a rigid body transformation may be used. The transformation may comprise or consist of one or more rotations and/or one or more translations. This allows a robust, scalable, and maintenance-free solution. The rigid body transformation may be obtained from a registration algorithm, such as ICP, which may be used iteratively.

The localization allows determining the position and/or orientation of the load handling vehicle in the spatial map as the surrounding captured in the first sensor signals can be mapped to the spatial map. In particular, the localization may be performed utilizing the Levenberg-Marquardt algorithm (LMA).

An observation model may be formulated as

$$y = Rx + t, \text{where } y, x, t \in \mathbb{R}^3 \text{ and } R \in \mathrm{SO}(3)$$

where $R$ is a 3-by-3 rotation matrix and $t$ is a 3-by-1 translation vector and $x$ is a 3-by-1 point. The sum of the weighted squares of the errors between the observed and fitted/transformed data may be minimized as follows:

$$\chi^2(\mathbf{p}) = \sum_{i=1}^{m} \left[ \frac{y(t_i) - \hat{y}(t_i; \mathbf{p})}{\sigma_{y_i}} \right]^2$$

$$= (y - \hat{y}(p))^T W (y - \hat{y}(p))$$

$$= y^T W \hat{y} - 2 y^T W \hat{y} + \hat{y}^T W \hat{y}$$

This allows improved stability in comparison to standard least-squares method, in particular if there are outliers present in the 3D point data. Minimizing the above function for the parameter vector $p$ can be used to solve unknowns such as heading, x and y coordinates of the vehicle or an object of the surrounding, such as the load target, given a set of 3D points. This can be well fitted for iterative optimizers, such as the LMA. For robust statistics, the effect of outliers on $p$ can be minimized by introducing a weighting function addressing the diagonal components $W$. In particular, the Welch function among the family of M-estimators may be used as the weighting function. The weighting may read as follows for the i'th component:

$$w_{ii} = e^{-(\frac{y(t_i) - \hat{y}(t_i)}{c})^2}$$

Here parameter c allows determining the influence and it can be modified by geometrically decreasing its value in every LMA iteration.

For the localization, the controller may thus be arranged to estimate, for example using the LMA, the rigid body transformation that optimizes alignment of the spatial, which may be represented by a source point cloud (as represented by *y* with a caret in the equations), to the one or more point clouds, such as the observed (also "target") point cloud (as represented by *y* in the equations).

For path planning, the source point cloud may be chosen so that it best aligns the vehicle for latching onto the load in the spatial map. This alignment may be obtained, for example, by using a CAD model in combination with a LiDAR sensor model, empirically by recording the source point cloud prior to latching, or in an interactive manner by guiding the driver using the display, such as a touch screen. After the transformations in the observation model are estimated and applied, e.g. in the LMA variant as described herein, the error function may be repeatedly evaluated by removing outliers and redefining the point-to-point correspondences. This process can be iterated until a fixed number of iterations is reached which, given a limited size point clouds, can render the computational load deterministic and thereby convenient in real-time applications. The iteration can also be stopped before the fixed number of iterations is reached if the error function converges faster.

The formulation may fundamentally be provided as a mathematical inverse problem, so the estimate *p* may be termed algebraic. Therefore, the uncertainties in *p* may be viewed as high-frequency perturbations in most cases of interest. On the other hand, the vehicle's (internal) state, which may comprise the speed and/or heading/heading rate, can be provided as high-bandwidth quantities subject to a low-frequency drift if propagated in an open-loop over time. As indicated above, they may be obtained from odometry, inertial navigation or exteroceptive perception system.

The vehicle may be localized using the third sensor signals by sensor fusion. For this purpose a Kalman filter (KF) may be used. A wide variety of applicable sensor fusion methodologies are available, in particular since the algebraic estimates in *p* are complementary to the motion state of the vehicle (which may also be referred as the ego-vehicle). In particular, a conventional PI-type 2-input control design may be used. This can be expressed in the state space form as follows:

$$\dot{\hat{y}} = \dot{x} + \hat{b} + k_P(x - \hat{y}), \text{ where } \dot{\hat{b}} = k_I(x - \hat{y}) \text{ and } \dot{x} = \frac{dx}{dt}$$

where the pair of inputs comprises a motion state x and its derivative (a time-derivative being illustrated by a dot over each of the corresponding symbols) originating from different sensors or modalities. Because of the complementary assumption, the filter can minimize the individual error sources of x and its derivative for smooth, low-latency and drift-free 1-DoF (degree of freedom) motion estimates. The filter dynamics can match with a high degree of accuracy the stationary KF design in the time domain. To account for the effect of outliers, the PI-gains of the KF may be modified by applying the Welch function (as described above) on the residual, e.g. as with the LMA. The KF's gains can be tuned in real-time to accommodate variations in the observation and process noise but without the computationally involved Riccati equation and gain update calculation of the standard KF.

For localization of the load target (or any other object of the surrounding), the one or more second point clouds of the surrounding of the vehicle obtained from the first sensor signals may be projected to the identification image and the controller may be arranged accordingly. For this purpose, a projection matrix may be utilized. The projection matrix may be written as a linear transformation

$$P = K[R|t]$$

where *P* is a projection matrix, e.g. 3-by-4 matrix, comprising two parts, namely, the intrinsic matrix *K* that can approximate a focal length and optical centre of the second sensor system, and [*R*|*t*] which is a combination of a rotation matrix *R*, e.g. a 3-by-3 matrix, and a translation vector *t* (e.g. a 3-by-1 vector) describing the transformation between the origin of the first sensor system to the second sensor system, also called as extrinsic matrix. While not shown, tangential and radial distortion parameters may also be accounted for.

For the localization for any objects in the surrounding, any or all of the three procedures as follows may be utilized. First, the one or more images of the surrounding of the vehicle generated by the second sensor system may be subjected to object recognition to obtain an image region outlining an identified load target on an identification image. The object recognition may be manual or automatic, e.g. by a neural network such as a deep neural network (DNN). The image region may be provided in two dimensions, for example defined by xy-coordinates, width and height of each object in the image. The image region may be provided simply as a bounding box.

Second, the one or more second point clouds of the surrounding of the vehicle obtained from the first sensor signals can be projected into the one or more images, in particular to the identification image. Here, the matrix $\boldsymbol{P}$ may be used to identify each object's, such as the (identified) load target's points, which may be three dimensional points, contained within the image region.

Third, the (initial) position and/or orientation of the object, such as the load target, may be propagated to an updated position and/or orientation, e.g. for time-critical localization. For this purpose, the third sensor signal may be utilized, for example as described above. The position and/or orientation may be propagated by sensor fusion, e.g. based on KF. The LMA may be applied on the object's 3D points detected by the object recognition applied in 2D to the second sensor signals.

We note that the automated recognition of the object may temporarily fail due to illumination, field-of-view limitations, or other issues. Based on the spatial map, e.g. by the source point cloud, and, optionally, the object's dimensions, the continuous estimation of the object's state, which can be done with the third sensor signals e.g. via the sensor fusion, allows propagating and predicting a volume of interest and discovering the object's 3D points within a newly observed point cloud y. The LMA may subsequently be applied as is. This procedure can bound any drifting in the case that the object recognition fails or the first sensor system is unable to provide the first sensor signals. This procedure, which complements the temporary failures or even lack of object recognition capability allows relaxing not only the performance but also hardware requirements. For example, in user-assisted operation, the driver of the vehicle may simply select the load target through the user interface, e.g. a touch screen, and then engage the automated operation for loading and/or unloading.

The vehicle may be localized based on the first sensor signals. This allows estimating the motion of the vehicle, which may also be referred to as the ego-motion, based on the spatial map. For this approach no conventional filtering or graph-based intensive optimization and building on large frameworks is required. The (ego-)vehicle trajectory may be purely composed of sequential position and/or orientation estimates, which may be represented in the spatial map, and the frame thereof, as a function of time for example as follows:

$$\hat{\mathbf{y}}(t_i) = \hat{\mathbf{y}}(t_{i-1}) + \hat{\mathbf{p}}(t_i)$$

The localization, e.g. with LMA as described above, may be progressively applied to the source point cloud, e.g. buffered 1 second in the past while in motion, with respect to the point cloud(s) from the first sensor signals (most) recently observed by the first sensor system. While initialized to zero, the propagation may start once the load target is identified for the first time.

For short-term autonomy, any drift in the progressive accumulation may be maintained at a minimum. This allows the calculus of the current lateral deviation and heading deviation of the (ego-)vehicle relative to the path without relying on an expensive absolute positioning system (e.g. DGPS) or infrastructure. This allows highly maneuverable and precise motion control. For time-critical propagation of the position and/or orientation of the (ego-)vehicle, the third sensor signals may be used in the localization and mapping framework to bound any drift in the vehicle's internal motion states, e.g. with the LMA and/or KF as described above.

If there is a large error in the map, e.g. as exhibited by the LMA, the (rigid body) transformation between the source and target point cloud may be prone to errors. Such a scan can be left unregistered without any immediate impact on propagating the ego-motion state using third sensor signals, or KF. This can account for temporary failures in mapping while keeping an estimate of the (ego-)vehicle position and/or orientation always available.

Utilizing the third sensor signals, or the sensor fusion, allows continuous availability of the estimates for the position and/or orientation of the (ego-)vehicle and/or the object, such as the load target. This allows repeated or continuous path and/or trajectory planning. Repeated planning can be important, as the noise in the planning tends to reduce as a function of distance to the object, such as the load target.

The vehicle may be a car-like vehicle with steering, such as a truck with a hooklift, which has non-holonomic dynamics. For such dynamics, the vehicle cannot be commanded to create a lateral motion without steering and having velocity in the longitudinal direction. Therefore, the path may typically be planned so that starts from the vehicle and ends at the load target with a curve that allows the vehicle to smoothly engage the load target, e.g. by latching the working unit(s), such as the hooklift, onto the load target.

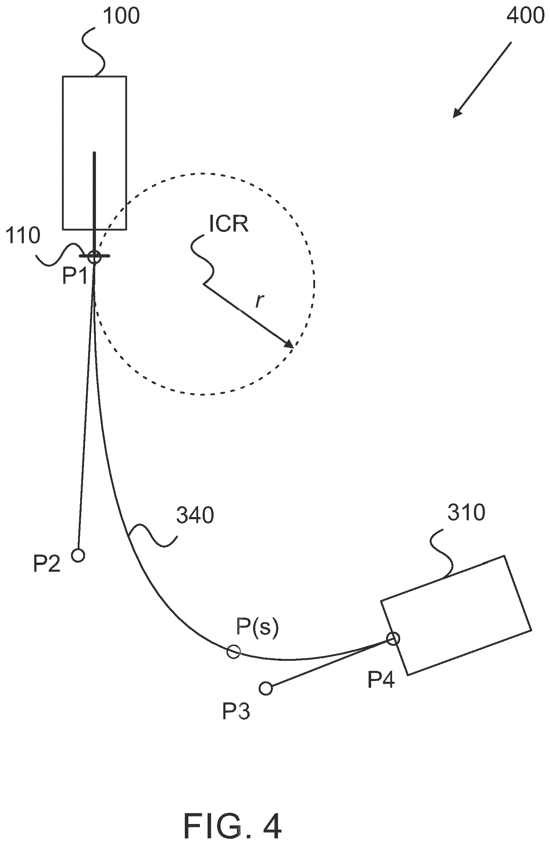

Fig. 4 illustrates path planning 400 for loading and/or unloading, where the path 340 may be provided by the controller. The path may start (P1) from the vehicle 100, for example at the working unit(s) 110. It may start smoothly by its tangency aligned with the orientation, e.g. the longitudinal direction, of the vehicle and/or the working unit(s). The path may end (P4) at the load target, for example at a point where the working unit(s) may engage the load target for loading and/or unloading. The path may end with a straight-line segment to allow improved path following performance from the trajectory tracking controller. The path may consist of several segments which are aligned with each other so that the planned position, heading and curvature along the path remains continuous. The path may end smoothly by its tangency aligned with the load target, e.g. its longitudinal direction, for loading and/or unloading. For example, using quintic Bezier path/curve definition, a clothoid curve or a polynomial curve allows efficiently accommodating such geometrical constraints. In particular, a set of six or more control points may be used for the path. The path may include its start point (P1) as a control point. Similarly, the path may include its end point (P4) as a control point. Two or more other points may be used on and/or off the path. A point (P2), such as a second point, may be used as a control point to define the direction of entering the path. Similarly, a point (P3), such as a penultimate point, may be used as a control point to define the direction of exiting from the path. The aforementioned two points may thus also be off-path. In some embodiments, two or more additional points may be located between the second point and the penultimate point. In other embodiments, four or more additional points may be located between the second point and the penultimate point.

The locus of any or all of the control points, e.g. P2, may be constrained, for example so that an initial heading on the path (e.g. as indicated by the line segment from P1 to P2) is tangential or at least substantially tangential to the vehicle. Similarly, the locus of any or all of the control points, e.g. P3 may be constrained so that a final heading on the path (e.g. as indicated by the line segment from P3 to P4) is tangential or at least substantially tangential to the load target and/or the vehicle when the vehicle is aligned for loading and/or unloading at the load target. This facilitates the vehicle arriving at the end point of the path (P4) in an orientation/pose where it is able to perform the loading and/or unloading. These control points for the path can ensure the proper incorporation of the continuous updates in the final position and/or orientation 342 of the vehicle at the end of the path, which is dependent on the position and/or orientation of the load target. Repeatedly updating the path allows this to hold even when the estimate for the position and/or orientation of the load target changes during the movement of the vehicle. The same holds as the estimate for the vehicle position and/or orientation, as given by the map-based localization of the (ego-)vehicle, changes during the movement of the vehicle, including the changes due to measurement noise. The trajectory data set may be provided to have the vehicle move on the path with its heading aligned tangentially with the path. An instantaneous center of rotation (ICR) for the vehicle is illustrated in the figure with radius of rotation r.

The path to any target P(s) may be defined as a parametric curve P(s), such as a Bezier path/curve, parameterized by path parameter s, e.g. such that P(0) = P1, and P(1) = P4. This can provide several effects as follows:

1) A discrete update of the position and/or orientation of the vehicle or the position and/or orientation of the load target or gradual improvement of estimations thereof are accommodated by an update of the path while the update can preserve smoothness of control.
2) Given a positive progress rate on the path, the vehicle can reach P4, also with correct final position and/or orientation, from any place on the path.
3) P(s) has a well-behaved, smooth, and differentiable formulation for desired values of the system at any position on the path between P1 and P4.
4) Adjustment of progress speed (derivative of s) can be done by the controller, or any autonomous load handling module, or in assistive systems by an onboard/offboard operator similar to commanding an acceleration pedal of the vehicle.
5) The path can be provided as a continuous function. It can also be discretized with any sample rate. The solution allows the controller to adapt with a broad range of sample times, e.g. from 1 millisecond to 1 second.
6) The exact shape of the path can be tuned based on the problem, vehicle dimensions, control performance, etc.
7) The instantaneous curvature of the path (1/r) can be utilized to keep the vehicle's steering commands staying tangential to the path at any moment of the motion. Therefore, the smoothness of the path can create not only a smooth heading but also a smooth steering behavior, which can increase component lifetimes for the vehicle.

The solution allows the controller to provide real-time trajectories for combined usage of steering and change in speed (i.e. braking and/or acceleration). A set of optimal solutions may be provided within which the best kinematically feasible solution is chosen to safely operate the vehicle. This can be carried out by connecting the (ego-)vehicle state with a set of terminal states, for example by using 4th- or 5th-order polynomial trajectories defined in the Frenet coordinate system or quintic Bezier paths/curves. Cost functions for the lateral and longitudinal motion planning may be defined as follows:

$$C_d = K_j j_d + K_T T + K_d \Delta d_T^2 \text{ and } C_s = K_j j_s + K_t T + K_d \Delta \dot{s}_T^2$$

where $K_j$, $K_T$, $K_d > 0$, the variables $j_d$ and $j_s$ are the lateral and longitudinal sums of squared jerks, $T$ is the lookahead time and the terms with $\Delta$ describe the square of the lateral deviation and the square of the difference between the desired and the planned speed at the end of the trajectory. These sums can be computed by selecting a small sequence of points along the path. Some main features of path planning may be summarized as follows:

1. The motion planning can be carried out in the Frenet frame with lateral and longitudinal cost functions that mimic human-like driving behavior with bounded velocity, curvature, and acceleration constraints while minimizing jerk. The trajectory planning may be based on quintic Bezier splines for compute speed and smoothness.

2. Planned trajectories (the trajectory data set) can have a fixed lookahead time (e.g. 1-10 seconds, such as 7 seconds). This allows the reactive collision avoidance built-in to preserve the kinematic feasibility under unexpected or emergency situations. Moreover, the lookahead is an enabler also for executing safe minimum risk maneuvers.

3. Feedback can be decoupled from the planning. Thus, lateral and/or heading deviation from the path can be supplied, optionally along with the best valid trajectory in each planning step. This can significantly reduce dependency on the specific characteristics of the vehicle. It also allows accounting for the non-holonomic nature of a typical vehicle in low-level actuator controls without technical difficulties, i.e., the proposed trajectory interface allows rendering the controller vehicle agnostic.

The trajectory data set can be provided with input directly from the path planning. It may be tuned for desired speed and/or acceleration profiles depending on the distance of the vehicle and/or the working unit(s) to the load target. Because of the constraints, the resulting maneuvers may be considered predictable, precise, and comfortable at the same time. The solution also allows safe integration since maneuvers for evasive driving can be easily parameterized to account for the presence of static and/or dynamic obstacles.

Under semi-automated operation, for example, the path and/or trajectory to the load target may be visualized to a driver using a display. In such an assisted operation, the driver may be provided control over the brake pedal while approaching the load target. In general, whenever identification for the load target temporarily fails, the controller may be arranged for facilitating projection of an illustration of the load target from the spatial map on the display for visualization purposes. This adds to the safety and comfort of the driver, as the upcoming maneuvers are intuitive and predictable seconds upfront from the screen.

In contrast to traditional automation systems, which build on accurate sensory setups and actuators often with dependency on infrastructure that can cost hundreds of thousands of euros, the solution allows utilizing a robotic architecture. It can be based on commonly available perception sensors (e.g. LiDAR and camera). In general, the first and the second sensor systems can be provided with exteroceptive sensors, which can render their measurements dependent on range and angle of view. This is particularly eminent taking into account the limited nonholonomic steering capabilities of the vehicle, in particular when the vehicle requires extended space for steering. The perception and decision-making solution disclosed can function with the best available estimation at any time, rendering it particularly effective for the non-holonomic vehicles.

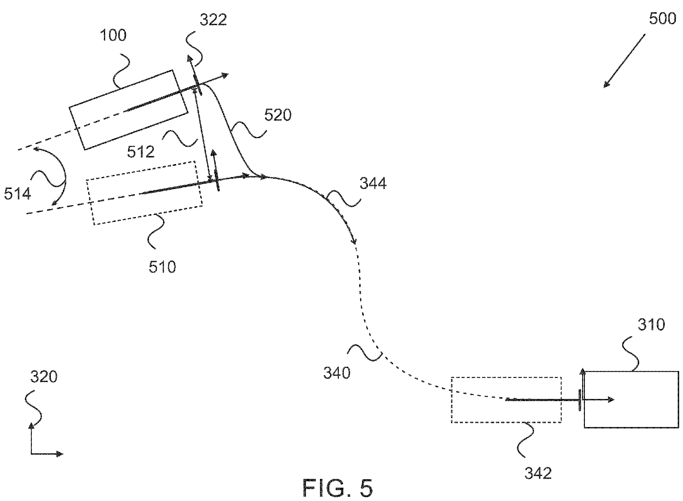

Fig. 5 illustrates trajectory deviation 500 according to an example. The deviations are exaggerated in the figure for clarity.

One cycle of operation for the controller may be defined as taking place from one measurement of the first sensor system to the next. The length of a cycle may be constant but it may also be spuriously extended if, for some reason, the first sensor signals are not provided or cannot be used for the localization. In between two cycle updates, deviations of the vehicle from the desired trajectory, which may include deviations in position and/or orientation, can be compensated by a response 520 of the controller, which may be provided as an update to the trajectory data set, for example based on the third sensor signals, as described also above. The next cycle can then accommodate the most recent updates of the first sensor system for the vehicle and/or any objects of the surrounding such as the load target. These can be accommodated in the spatial map and in the coordinate frame 320 thereof.

The actual position and/or orientation of the vehicle 100 may differ from the planned position and/or orientation 510. The deviation may include a lateral deviation 512 and/or heading deviation 514 (the longitudinal dashed lines extending from the actual position and the planned position in the figure depict an actual heading and a planned heading for the vehicle so any angular deviation from these being parallel signifies a heading deviation. Within a cycle of operation, e.g. between two separate instances of the first sensor signals being utilized for the localization of the vehicle and/or the load target, the controller may provide a response, e.g. an update to the trajectory data set, for guiding the vehicle towards the path 344 without necessarily updating the path.

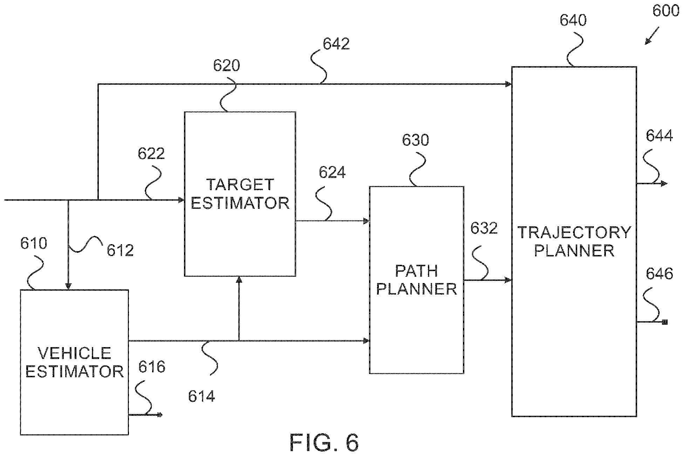

Fig. 6 shows an example 600 of dataflow and modules for the solution. Any or all the modules may be provided by the controller 120. The controller may be provided with an architecture for the localization which is model-based and the architecture can provide the localization of the (ego-)vehicle simultaneously with planning the path and providing the trajectory data set to the load target. The modular structure makes it straightforward to split the computation to different physical hardware with different cycle times depending on the application. The architecture can be built by tools generally available to a person skilled in the art for code generation and hardware agnostic implementation. The object recognition, or identifying the objects of the surrounding such as the load target, is not explicitly shown in the figure. It can be provided utilizing massively parallel system-on-chip (SoC) based computing (e.g. GPU).

The vehicle estimator 610 facilitates localizing the vehicle, for example as described above, and it may be configured to utilize various inputs including, at least, the first sensor signals and, optionally, the third sensor signals. It then provides, as a first output 614, an estimation for the position and/or orientation of the vehicle. This may be delivered to a target estimator 620 and/or a path planner 630. The vehicle estimator 610 may also provide one or more additional outputs, in particular the spatial map 616 or an outline thereof, which may be provided, for example as a point cloud map, for the user interface and/or the target estimator.

The target estimator 620 facilitates localizing the load target, for example as described above, and it may be configured to utilize any or all of the inputs 612 provided to the vehicle estimator. In addition to the first sensor signals and, optionally, the third sensor signals, the inputs 622 to the target estimator include, at least, the second sensor signals and, optionally, an input for defining the image region. For both the vehicle estimator and the target estimator, time signal such as the differential time may be provided. The target estimator provides, as a second output 624, an estimation for the position and/or orientation of the load target. This may be delivered to the path planner 630.

The path planner 630 may utilize the estimation for the position and/or orientation of the vehicle and the estimation for the position and/or orientation of the load target to determine a path from the position and/or orientation of the vehicle to the position and/or orientation of the load target as a third output 632. The third output may be utilized, optionally together with other inputs 642 such as the third sensor signal to provide the trajectory data set 644. In particular, the other inputs 634 may be provided independently as an input to the trajectory planner so that the trajectory data set may be updated based on the other inputs 634 in particular the thirds sensor signals, even when updates from the third output are not available. The trajectory planner may also be provided with the capability to issue a stop command for the vehicle, for example in case of an emergency or an anticipated collision, or when a threshold time has passed since the last third output was provided to the trajectory planner. The stop command may be issued as a separate output 646 allowing it to be directly provided for vehicle control.

The vehicle estimator 610 and the target estimator 620 can be founded upon the LMA and can, in any case, be provided computationally intensive, so they may be allocated with a priority for computational resources from the controller. The computational effort may be managed also by fixing the maximum number of iterations at the vehicle estimator and/or the target estimator, e.g. for the LMA, and fixing the size of the processed at the vehicle estimator and/or the target estimator, in particular by the LMA. The number of iterations may be limited below 100, for example to a maximum of 10-20. The point clouds may also be reduced in size, for example to below 1000 of points, such as 3D points, out of those sensed by the first sensor system per each scan, the number of which may well exceed a hundred thousand.

The vehicle estimator 610 and/or the target estimator 620 can utilize the first sensor signals, for example by utilizing the LMA, to provide their respective outputs. The arrival of the first sensor signals can be event-based so providing the output dependent on the first sensor signals may become event-based. For real-time or time-critical output, the vehicle estimator 610 and/or the target estimator 620 can utilize the third sensor signals, for example by means of sensor fusion. For this purpose, Kalman filtering may be utilized. This allows the first output 614 and/or the second output 624 to be provided with a frequency larger than the frequency of providing the first sensor signals, in a time-critical manner or even substantially in real-time, in particular in case of single-point failures in point cloud updates.

Some main features of the hardware architecture may be summarized as follows:

1. Sensing of the surrounding and the objects therein can be provided with the first and the second sensor system with synchronization electronics built in. This can be done with automotive-grade reliability.
2. For memory-intensive tasks, an SoC-based embedded unit may be provided, allowing the object recognition, or the identification of the load target, and processing of the first and second sensor signals to be provided. This can also be of automotive-grade. The unit may be provided to meet the ISO 26262 requirements for ASIL C(D).
3. For the object recognition, one or more deep learning algorithms (DNN) may be utilized. The deep learning algorithm(s) may be trained on an annotated dataset to detect relevant objects and may be balanced for speed and accuracy.
4. The SoC unit can be connected by an industrial or safe PC matching relevant safety needs (e.g. PLe or SIL 3 capable) for real-time sensor fusion, 2-way communication, and interfacing the vehicle's by-wires and motion control. Typical feedback from the vehicle may include, e.g., the speed and/or heading rate signals (e.g. from EBS), which can be readable from the CAN bus.

An on-board solution, for example as part of the vehicle or the working equipment assembly, may comprise the first and second sensor systems coupled to the controller, for example to the SoC thereof, for providing the first and second sensor signals to the SoC. The controller may be coupled to the trajectory interface, for example by means of a safe iPC, for bidirectional communication with the vehicle. The controller may also be coupled to one or more external servers, e.g. to a cloud computing system, e.g. for AI training and/or deployment. This allows data governance and management to be performed in the cloud computing system.

The solution can be provided vehicle agnostic. The trajectory interface can be used as an abstraction layer, which mitigates the effect of vehicle-specific developments to the solution. The trajectory interface also allows clarifying the responsibilities and measures between the vehicle's by-wires layer and any robotic layer(s) of the working unit(s). This allows avoiding commercial and technical complications in safety analysis and system integration. This also allows monitoring performance of the vehicle for manoeuvres for the operation of the working unit(s) such as the hooklift(s). The presence of the trajectory interface for the vehicle by-wires control system is nevertheless not a necessary requirement for the solution to be deployed. Kinematic/dynamic equations and algorithms can be provided for the controller for converting trajectory to actuator commands for driveline, steering, brake, etc.

The process units for the solution can be provided with various alternatives available to the skilled person. The subsystems and the algorithms, and generally all the blocks may be viewed to a large extent hardware-agnostic with the model-based design of the solution. Due to the use of coordinate systems for sensors and calibrated transformation between them, the solution can be made robust to changes in the properties of the first sensor system, e.g. the number or resolution of the sensors or the scanning frequency of the system. The solution can be utilized with a wide range of sensor systems available to the person skilled in the art. The solution's requirements for hardware can be made general enough that it matches the requirements of mapping and obstacle avoidance. The first sensor system, such as a LiDAR system, can consist or comprise of a rotating laser scanner, a solid-state scanner and/or a continuous wave or pulsed scanner. For the second sensor system, calculations and projections can be done after rectification of images. Therefore, different camera optics can be adapted for use. The controller may be provided with any intrinsic and/or extrinsic parameters of the sensor systems as input information and/or by calibration.

The solution allows real-time smooth control commands. A commonly known drawback of traditional perception-based pose estimation and localization can be their jumpy behaviour. Such a characteristic in conjunction with the nonholonomic dynamic of the vehicle can create unnecessary steering commands which can cause wear and tear of components and can look irrational to a user. The solution allows overcoming such shortcomings in particular by optimal estimations in combination with sensor fusion together with smooth and well-behaved motion planning based on estimated values and parametrizing the output as a path generator in real-time.

The solution can be offered as modules for a larger system or compiled into a stand-alone program on an independent process unit. For example, depending on the application, the controller can be provided on an industrial PC dedicated to the load handling process or ADAS (Advanced Driver-Assistance Systems) modules. An approach can be a combination of the solution with teleoperation approaches such that an on-site or off-site remote operator would command the vehicle thereby benefiting from short-term autonomy that removes the need for data-intensive synchronous communication. Also an autonomous load handling vehicle can be provided utilizing state-of-the-art vehicle capabilities using a digital interface towards its by-wires.

The solution also allows providing Object and Event Detection and Response (OEDR). The solution may be arranged to cover necessary verifications and failure detections and safety concerns related to planning, mapping, localization, and positioning under the topic of Dynamic Driving Tasks (DDT) and OEDR for L4 autonomous driving in accordance with SAE International's J3016. For instance, monitoring of the object remaining stationary or consistency among estimated motion and force data can be used to detect anomalies and detect abnormal dynamics of the load pick and placement. Also, the first sensor system comprising the FMCW LiDAR can provide instantaneous Doppler-based detection and removal of moving objects for the point clouds prior, e.g., pose estimation.

Importantly, with the present solution utilizing the spatial map, the path may be planned and/or the trajectory data set determined from the position and/or orientation where the vehicle is assumed to be (in the spatial map), i.e. not necessary where the vehicle is. Similarly, the path may be planned and/or the trajectory data set determined to the position and/or orientation where the load target is assumed to be (in the spatial map), i.e. not necessary where the load target is. This can be done whenever the first and/or third sensor signals are received by the controller. The position and/or orientation of the vehicle and/or the load target may be determined based on a coordinate frame in the spatial mapping, in contrast to a feature on an image. The solution also allows decoupling the planning from the control with all the associated benefits as described herein.

The controller as described above may be implemented in software, hardware, application logic or a combination of software, hardware and application logic. The application logic, software or instruction set may be maintained on any one of various conventional computer-readable media. A "computer-readable medium" may be any media or means that can contain, store, communicate, propagate or transport the instructions for use by or in connection with an instruction execution system, apparatus, or device, such as a computer. A computer-readable medium may comprise a computer-readable storage medium that may be any media or means that can contain or store the instructions for use by or in connection with an instruction execution system, apparatus, or device, such as a computer. The examples can store information relating to various processes described herein. This information can be stored in one or more memories, such as a hard disk, optical disk, magneto-optical disk, RAM, and the like. One or more databases can store the information used to implement the embodiments. The databases can be organized using data structures (e.g., records, tables, arrays, fields, graphs, trees, lists, and the like) included in one or more memories or storage devices listed herein. The databases may be located on one or more devices comprising local and/or remote devices such as servers. The processes described with respect to the embodiments can include appropriate data structures for storing data collected and/or generated by the processes of the devices and subsystems of the embodiments in one or more databases.

All or a portion of the embodiments can be implemented using one or more general purpose processors, microprocessors, digital signal processors, micro-controllers, and the like, programmed according to the teachings of the embodiments, as will be appreciated by those skilled in the computer and/or software art (s). Appropriate software can be readily prepared by programmers of ordinary skill based on the teachings of the embodiments, as will be appreciated by those skilled in the software art. In addition, the embodiments can be implemented by the preparation of application-specific integrated circuits or by interconnecting an appropriate network of conventional component circuits, as will be appreciated by those skilled in the electrical art(s). Thus, the embodiments are not limited to any specific combination of hardware and/or software.

The different functions discussed herein may be performed in a different order and/or concurrently with each other.

Any range or device value given herein may be extended or altered without losing the effect sought, unless indicated otherwise. Also any example may be combined with another example unless explicitly disallowed.

Although the subject matter has been described in language specific to structural features and/or acts, it is to be understood that the subject matter defined in the appended claims is not necessarily limited to the specific features or acts described above. Rather, the specific features and acts described above are disclosed as examples of implementing the claims and other equivalent features and acts are intended to be within the scope of the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item may refer to one or more of those items.

The term 'comprising' is used herein to mean including the method, blocks or elements identified, but that such blocks or elements do not comprise an exclusive list and a method or apparatus may contain additional blocks or elements.

Numerical descriptors such as 'first', 'second', and the like are used in this text simply as a way of differentiating between parts that otherwise have similar names. The numerical descriptors are not to be construed as indicating any particular order, such as an order of preference, manufacture, or occurrence in any particular structure.

Although the invention has been described in conjunction with a certain type of apparatus and/or method, it should be understood that the invention is not limited to any certain type of apparatus and/or method. While the present inventions have been described in connection with a number of examples, embodiments and implementations, the present inventions are not so limited, but rather cover various modifications, and equivalent arrangements, when falling within the purview of the claims. Although various examples have been described above with a certain degree of particularity, or with reference to one or more individual embodiments, those skilled in the art could make numerous alterations to the disclosed examples without departing from the scope of this specification.

**Claims**

1. A load handling controller (120) for localizing a load handling vehicle (100) and a load target (310), the load handling controller being arranged to:

   - obtain a spatial map describing a surrounding (130) of the load handling vehicle;
   - receive first sensor signals from a first sensor system (140) for generating point clouds of the surrounding of the load handling vehicle;
   - receive second sensor signals from a second sensor system (142) for generating images of the surrounding of the load handling vehicle;
   - receive third sensor signals from a third sensor system (180) monitoring a state of the load handling vehicle;
   - localizing the load handling vehicle and the load target in the spatial map based on the first sensor signals and the second sensor signals, the load handling controller being arranged to localize the load handling vehicle in the spatial map by first determining an initial position of the load handling vehicle based on the first sensor signals and then updating the initial position based on the third sensor signals;
   - plan a path (340) for the load handling vehicle from the position of the load handling vehicle in the spatial map to the position of the load target in the spatial map; and
   - determine a trajectory data set for directing the load handling vehicle along the path towards the load target for loading and/or unloading at the load target;

      wherein the load handling controller is arranged to repeatedly update with a first frequency the position of the load handling vehicle based on the third sensor signals;

**characterized in that**:

the second sensor signals are synchronized in time with the first sensor signals; and
the load handling controller is arranged to repeatedly update with a second frequency the path based on the position of the load handling vehicle, wherein the first frequency is equal to or larger than the second frequency.

2. The load handling controller according to claim 1, wherein localizing the load handling vehicle comprises fitting one or more first point clouds of the surrounding of the load handling vehicle obtained from the first sensor signals to the spatial map to determine the position of the load handling vehicle in the spatial map.

3. The load handling controller according to any preceding claim, wherein localizing the load target in the spatial map comprises:

- identifying the load target based on one or more images of the surrounding of the load handling vehicle generated by the second sensor system to obtain an identified load target on an identification image; and
- determining the position of the load target in the spatial map by projecting one or more second point clouds of the surrounding of the load handling vehicle obtained from the first sensor signals to the identification image, the one or more second point clouds being synchronized in time with respect to the one or more images.

4. The load handling controller according to claim 3, when dependent on claim 2, wherein the one or more first point clouds comprise or are synchronized in time with the one or more second point clouds.

5. The load handling controller according to claim 3 or 4, wherein identifying the load target comprises providing an image region outlining the identified load target in the identification image and the one or more second point clouds are projected to the identification image to determine points of the one or more second point clouds corresponding to the identified load target within the image region.

6. The load handling controller according to any preceding claim, arranged to repeatedly update the spatial map based on the first sensor signals.

7. The load handling controller according to any preceding claim, arranged to estimate speed and/or velocity of the load handling vehicle based on the first sensor signals and to localize the load handling vehicle in the spatial map based on the speed and/or velocity estimated.

8. The load handling controller according to any preceding claim, arranged to store the spatial map into a memory to be activated when the load handling vehicle arrives at the surrounding described by the spatial map.

9. The load handling controller according to any preceding claim, wherein localizing the load handling vehicle and the load target comprises determining an orientation of the load handling vehicle and an orientation of the load target in the spatial map.

10. A working equipment assembly for a load handling vehicle (100), the working equipment assembly comprising:

- a load handling controller (120) according to any of the preceding claims;
- the first sensor system (140) arranged to monitor a surrounding (130) of the load handling vehicle;
- the second sensor system (142) arranged to monitor the surrounding of the load handling vehicle;
- one or more movable working equipment actuators arranged to facilitate loading and/or unloading of the load handling vehicle; and
- a working equipment controller arranged to control movement of the working equipment actuators during the loading and/or the unloading.

11. A method (200) for localizing a load handling vehicle and a load target, the method comprising:

- obtaining (210) a spatial map describing a surrounding of the load handling vehicle;
- receiving (220) first sensor signals from a first sensor system for generating point clouds of the surrounding of the load handling vehicle;

- receiving (220) second sensor signals from a second sensor system for generating images of the surrounding of the load handling vehicle;
- receiving third sensor signals from a third sensor system monitoring a state of the load handling vehicle;
- localizing (230) the load handling vehicle and the load target in the spatial map based on the first sensor signals and the second sensor signals and localizing the load handling vehicle in the spatial map by first determining an initial position of the load handling vehicle based on the first sensor signals and then updating the initial position based on the third sensor signals;
- planning a path for the load handling vehicle from the position of the load handling vehicle in the spatial map to the position of the load target in the spatial map;
- determining a trajectory data set for directing the load handling vehicle along the path towards the load target for loading and/or unloading at the load target; and
- repeatedly updating with a first frequency the position of the load handling vehicle based on the third sensor signals;

**characterized in that**:

the second sensor signals are synchronized in time with the first sensor signals; and
the method comprises repeatedly updating with a second frequency the path based on the position of the load handling vehicle, wherein the first frequency is equal to or larger than the second frequency.

12. A computer program product comprising instructions which, when executed by a computer, cause the computer to carry out the method of claim 11.

**Patentansprüche**

1. Lasthandhabungssteuerung (120) zum Lokalisieren eines Lasthandhabungsfahrzeugs (100) und eines Lastziels (310), wobei die Lasthandhabungssteuerung für folgendes ausgelegt ist:

- Erhalten einer räumlichen Karte, die eine Umgebung (130) des Lasthandhabungsfahrzeugs beschreibt;
- Empfangen erster Sensorsignale von einem ersten Sensorsystem (140) zum Erzeugen von Punktwolken der Umgebung des Lasthandhabungsfahrzeugs;
- Empfangen zweiter Sensorsignale von einem zweiten Sensorsystem (142) zum Erzeugen von Bildern der Umgebung des Lasthandhabungsfahrzeugs;
- Empfangen dritter Sensorsignale von einem dritten Sensorsystem (180), das einen Zustand des Lasthandhabungsfahrzeugs überwacht;
- Lokalisieren des Lasthandhabungsfahrzeugs und des Lastziels in der räumlichen Karte basierend auf den ersten Sensorsignalen und den zweiten Sensorsignalen, wobei die Lasthandhabungssteuerung so ausgelegt ist, dass sie das Lasthandhabungsfahrzeug in der räumlichen Karte lokalisiert, indem sie als erstes eine anfängliche Position des Lasthandhabungsfahrzeugs basierend auf den ersten Sensorsignalen bestimmt und dann die anfängliche Position basierend auf den dritten Sensorsignalen aktualisiert;
- Planen eines Pfads (340) für das Lasthandhabungsfahrzeug von der Position des Lasthandhabungsfahrzeugs in der räumlichen Karte zu der Position des Lastziels in der räumlichen Karte; und
- Bestimmen eines Trajektoriendatensatzes zum Leiten des Lasthandhabungsfahrzeugs entlang des Pfads in Richtung des Lastziels zum Laden und/oder Entladen an dem Lastziel;

wobei die Lasthandhabungssteuerung so ausgelegt ist, dass sie die Position des Lasthandhabungsfahrzeugs basierend auf den dritten Sensorsignalen mit einer ersten Frequenz wiederholt aktualisiert;

**dadurch gekennzeichnet, dass**:

die zweiten Sensorsignale zeitlich mit den ersten Sensorsignalen synchronisiert sind; und
die Lasthandhabungssteuerung so ausgelegt ist, dass sie den Pfad basierend auf der Position des Lasthandhabungsfahrzeugs mit einer zweiten Frequenz wiederholt aktualisiert, wobei die erste Frequenz gleich oder größer als die zweite Frequenz ist.

2. Lasthandhabungssteuerung gemäß Anspruch 1, wobei das Lokalisieren des Lasthandhabungsfahrzeugs das Anpassen einer oder mehrerer erster Punktwolken der Umgebung des Lasthandhabungsfahrzeugs, die aus den ersten Sensorsignalen erhalten wurden, an die räumliche Karte umfasst, um die Position des Lasthandhabungsfahrzeugs in der räumlichen Karte zu bestimmen.

3. Lasthandhabungssteuerung gemäß einem der vorhergehenden Ansprüche, wobei das Lokalisieren des Lastziels in der räumlichen Karte folgendes umfasst:

- Identifizieren des Lastziels basierend auf einem oder mehreren Bildern der Umgebung des Lasthandhabungsfahrzeugs, die durch das zweite Sensorsystem erzeugt wurden, um ein identifiziertes Lastziel auf einem Identifikationsbild zu erhalten; und
- Bestimmen der Position des Lastziels in der räumlichen Karte durch Projizieren einer oder mehrerer zweiter Punktwolken der Umgebung des Lasthandhabungsfahrzeugs, die aus den ersten Sensorsignalen erhalten wurden, auf das Identifikationsbild, wobei die eine oder mehreren zweiten Punktwolken zeitlich in Bezug auf das eine oder die mehreren Bilder synchronisiert sind.

4. Lasthandhabungssteuerung gemäß Anspruch 3, wenn abhängig von Anspruch 2, wobei die eine oder mehreren ersten Punktwolken die eine oder mehreren zweiten Punktwolken umfassen oder zeitlich mit diesen synchronisiert sind.

5. Lasthandhabungssteuerung gemäß Anspruch 3 oder 4, wobei das Identifizieren des Lastziels das Bereitstellen eines Bildbereichs umfasst, der das identifizierte Lastziel im Identifizierungsbild umrandet, und die eine oder mehreren zweiten Punktwolken auf das Identifizierungsbild projiziert werden, um Punkte der einen oder mehreren zweiten Punktwolken zu bestimmen, die dem identifizierten Lastziel innerhalb des Bildbereichs entsprechen.

6. Lasthandhabungssteuerung gemäß einem der vorhergehenden Ansprüche, die so ausgelegt ist, dass sie die räumliche Karte basierend auf den ersten Sensorsignalen wiederholt aktualisiert.

7. Lasthandhabungssteuerung gemäß einem der vorhergehenden Ansprüche, die so ausgelegt ist, dass sie die Schnelligkeit und/oder Geschwindigkeit des Lasthandhabungsfahrzeugs basierend auf den ersten Sensorsignalen schätzt und das Lasthandhabungsfahrzeugs basierend auf der geschätzten Schnelligkeit und/oder Geschwindigkeit in der räumlichen Karte lokalisiert.

8. Lasthandhabungssteuerung gemäß einem der vorhergehenden Ansprüche, die dazu ausgelegt ist, die räumliche Karte in einem Speicher zu speichern, der zu aktivieren ist, wenn das Lasthandhabungsfahrzeug in der Umgebung ankommt, die durch die räumliche Karte beschrieben ist.

9. Lasthandhabungssteuerung gemäß einem der vorhergehenden Ansprüche, wobei das Lokalisieren das Lasthandhabungsfahrzeugs und des Lastziels das Bestimmen einer Orientierung des Lasthandhabungsfahrzeugs und einer Orientierung des Lastziels in der räumlichen Karte umfasst.

10. Arbeitsausrüstungsanordnung für ein Lasthandhabungsfahrzeug (100), wobei die Arbeitsausrüstungsanordnung folgendes umfasst:

- eine Lasthandhabungssteuerung (120) gemäß einem der vorhergehenden Ansprüche;
- das erste Sensorsystem (140), das zur Überwachung einer Umgebung (130) des Lasthandhabungsfahrzeugs ausgelegt ist;
- das zweite Sensorsystem (142), das zur Überwachung der Umgebung des Lasthandhabungsfahrzeugs ausgelegt ist;
- einen oder mehrere bewegliche Arbeitsausrüstungsaktuatoren, die dazu ausgelegt sind, das Laden und/oder Entladen des Lasthandhabungsfahrzeugs zu erleichtern; und
- eine Arbeitsausrüstungssteuerung, die dazu ausgelegt ist, die Bewegung der Arbeitsausrüstungsaktuatoren während des Ladens und/oder Entladens zu steuern.

11. Verfahren (200) zum Lokalisieren eines Lasthandhabungsfahrzeugs und eines Lastziels, wobei das Verfahren umfasst:

- Erhalten (210) einer räumlichen Karte, die eine Umgebung des Lasthandhabungsfahrzeugs beschreibt;
- Empfangen (220) erster Sensorsignale von einem ersten Sensorsystem zum Erzeugen von Punktwolken der Umgebung des Lasthandhabungsfahrzeugs;
- Empfangen (220) zweiter Sensorsignale von einem zweiten Sensorsystem zum Erzeugen von Bildern der Umgebung des Lasthandhabungsfahrzeugs;
- Empfangen dritter Sensorsignale von einem dritten Sensorsystem, das einen Zustand des Lasthandhabungsfahrzeugs überwacht;

- Lokalisieren (230) des Lasthandhabungsfahrzeugs und des Lastziels in der räumlichen Karte basierend auf den ersten Sensorsignalen und den zweiten Sensorsignalen und Lokalisieren des Lasthandhabungsfahrzeug in der räumlichen Karte, indem sie als erstes eine anfängliche Position des Lasthandhabungsfahrzeugs basierend auf den ersten Sensorsignalen bestimmt und dann die anfängliche Position basierend auf den dritten Sensorsignalen aktualisiert;

- Planen eines Pfads für das Lasthandhabungsfahrzeug von der Position des Lasthandhabungsfahrzeugs in der räumlichen Karte zu der Position des Lastziels in der räumlichen Karte;

- Bestimmen eines Trajektoriendatensatzes zum Leiten des Lasthandhabungsfahrzeugs entlang des Pfads in Richtung des Lastziels zum Laden und/oder Entladen an dem Lastziel; und

- wiederholtes Aktualisieren der Position des Lasthandhabungsfahrzeugs mit einer ersten Frequenz basierend auf den dritten Sensorsignalen;

**dadurch gekennzeichnet, dass**:

die zweiten Sensorsignale zeitlich mit den ersten Sensorsignalen synchronisiert sind; und

das Verfahren das wiederholte Aktualisieren des Pfads mit einer zweiten Frequenz basierend auf der Position des Lasthandhabungsfahrzeugs umfasst, wobei die erste Frequenz gleich oder größer als die zweite Frequenz ist.

**12.** Computerprogrammprodukt, das Anweisungen umfasst, die, wenn sie von einem Computer ausgeführt werden, den Computer dazu veranlassen, das Verfahren nach Anspruch 11 auszuführen.

## Revendications

**1.** Dispositif de commande de manipulation de charge (120) pour localiser un véhicule de manipulation de charge (100) et une cible de charge (310), le dispositif de commande de manipulation de charge étant agencé pour :

- obtenir une carte spatiale décrivant un environnement (130) du véhicule de manipulation de charge ;

- recevoir des premiers signaux de capteur en provenance d'un premier système de capteur (140) pour générer des nuages de points de l'environnement du véhicule de manipulation de charge ;

- recevoir des deuxièmes signaux de capteur en provenance d'un deuxième système de capteur (142) pour générer des images de l'environnement du véhicule de manipulation de charge ;

- recevoir des troisièmes signaux de capteur en provenance d'un troisième système de capteur (180) surveillant un état du véhicule de manipulation de charge ;

- localiser le véhicule de manipulation de charge et la cible de charge dans la carte spatiale sur la base des premiers signaux de capteur et des deuxièmes signaux de capteur, le dispositif de commande de manipulation de charge étant agencé pour localiser le véhicule de manipulation de charge dans la carte spatiale en déterminant d'abord une position initiale du véhicule de manipulation de charge sur la base des premiers signaux de capteur, puis en mettant à jour la position initiale sur la base des troisièmes signaux de capteur ;

- planifier un chemin (340) pour le véhicule de manipulation de charge depuis la position du véhicule de manipulation de charge dans la carte spatiale jusqu'à la position de la cible de charge dans la carte spatiale ; et

- déterminer un ensemble de données de trajectoire pour diriger le véhicule de manipulation de charge le long du chemin vers la cible de charge pour le chargement et/ou le déchargement au niveau de la cible de charge ;

dans lequel le dispositif de commande de manipulation de charge est agencé pour mettre à jour de manière répétée avec une première fréquence la position du véhicule de manipulation de charge sur la base des troisièmes signaux de capteur ;

**caractérisé en ce que** :

les deuxièmes signaux de capteur sont synchronisés dans le temps avec les premiers signaux de capteur ; et

le dispositif de commande de manipulation de charge est agencé pour mettre à jour de manière répétée avec une deuxième fréquence le chemin sur la base de la position du véhicule de manipulation de charge, dans lequel la première fréquence est égale ou supérieure à la deuxième fréquence.

**2.** Dispositif de commande de manipulation de charge selon la revendication 1, dans lequel la localisation du véhicule de manipulation de charge comprend un ajustement d'un ou plusieurs premiers nuages de points de l'environnement du véhicule de manipulation de charge obtenus à partir des premiers signaux de capteur à la carte spatiale pour déterminer la position du véhicule de manipulation de charge dans la carte spatiale.

3. Dispositif de commande de manipulation de charge selon une quelconque revendication précédente, dans lequel la localisation de la cible de charge dans la carte spatiale comprend :

- une identification de la cible de charge sur la base d'une ou plusieurs images de l'environnement du véhicule de manipulation de charge générées par le deuxième système de capteur pour obtenir une cible de charge identifiée sur une image d'identification ; et
- une détermination de la position de la cible de charge dans la carte spatiale en projetant un ou plusieurs seconds nuages de points de l'environnement du véhicule de manipulation de charge obtenus à partir des premiers signaux de capteur vers l'image d'identification, les un ou plusieurs seconds nuages de points étant synchronisés dans le temps par rapport aux une ou plusieurs images.

4. Dispositif de commande de manipulation de charge selon la revendication 3, lorsqu'elle est dépendante de la revendication 2, dans lequel les un ou plusieurs premiers nuages de points comprennent ou sont synchronisés dans le temps avec les un ou plusieurs seconds nuages de points.

5. Dispositif de commande de manipulation de charge selon la revendication 3 ou 4, dans lequel l'identification de la cible de charge comprend une fourniture d'une région d'image délimitant la cible de charge identifiée dans l'image d'identification et les un ou plusieurs seconds nuages de points sont projetés sur l'image d'identification pour déterminer des points des un ou plusieurs seconds nuages de points correspondant à la cible de charge identifiée à l'intérieur de la région d'image.

6. Dispositif de commande de manipulation de charge selon une quelconque revendication précédente, agencé pour mettre à jour de façon répétée la carte spatiale sur la base des premiers signaux de capteur.

7. Dispositif de commande de manipulation de charge selon une quelconque revendication précédente, agencé pour estimer la vitesse et/ou la vélocité du véhicule de manipulation de charge sur la base des premiers signaux de capteur et pour localiser le véhicule de manipulation de charge dans la carte spatiale sur la base de la vitesse et/ou de la vélocité estimées.

8. Dispositif de commande de manipulation de charge selon une quelconque revendication précédente, agencé pour stocker la carte spatiale dans une mémoire à activer lorsque le véhicule de manipulation de charge arrive au niveau de l'environnement décrit par la carte spatiale.

9. Dispositif de commande de manipulation de charge selon une quelconque revendication précédente, dans lequel la localisation du véhicule de manipulation de charge et de la cible de charge comprend une détermination d'une orientation du véhicule de manipulation de charge et d'une orientation de la cible de charge dans la carte spatiale.

10. Ensemble d'équipement de travail pour un véhicule de manipulation de charge (100), l'ensemble d'équipement de travail comprenant :

- un dispositif de commande de manipulation de charge (120) selon une quelconque revendication précédente ;
- le premier système de capteur (140) agencé pour surveiller un environnement (130) du véhicule de manipulation de charge ;
- le deuxième système de capteur (142) agencé pour surveiller l'environnement du véhicule de manipulation de charge ;
- un ou plusieurs actionneurs d'équipement de travail mobiles agencés pour faciliter le chargement et/ou le déchargement du véhicule de manipulation de charge ; et
- un dispositif de commande d'équipement de travail agencé pour commander le déplacement des actionneurs d'équipement de travail lors du chargement et/ou du déchargement.

11. Procédé (200) pour localiser un véhicule de manipulation de charge et une cible de charge, le procédé comprenant :

- une obtention (210) d'une carte spatiale décrivant un environnement du véhicule de manipulation de charge ;
- une réception (220) de premiers signaux de capteur en provenance d'un premier système de capteur pour générer des nuages de points de l'environnement du véhicule de manipulation de charge ;

- une réception (220) de deuxièmes signaux de capteur en provenance d'un deuxième système de capteur pour générer des images de l'environnement du véhicule de manipulation de charge ;
- une réception de troisièmes signaux de capteur en provenance d'un troisième système de capteur surveillant un état du véhicule de manipulation de charge ;
- une localisation (230) du véhicule de manipulation de charge et de la cible de charge dans la carte spatiale sur la base des premiers signaux de capteur et des deuxièmes signaux de capteur et une localisation du véhicule de manipulation de charge dans la carte spatiale en déterminant d'abord une position initiale du véhicule de manipulation de charge sur la base des premiers signaux de capteur, puis en mettant à jour la position initiale sur la base des troisièmes signaux de capteur ;
- une planification d'un chemin pour le véhicule de manipulation de charge depuis la position du véhicule de manipulation de charge dans la carte spatiale jusqu'à la position de la cible de charge dans la carte spatiale ;
- une détermination d'un ensemble de données de trajectoire pour diriger le véhicule de manipulation de charge le long du chemin vers la cible de charge pour le chargement et/ou le déchargement au niveau de la cible de charge ;
- une mise à jour répétée avec une première fréquence de la position du véhicule de manipulation de charge sur la base des troisièmes signaux de capteur ;

**caractérisé en ce que** :

les deuxièmes signaux de capteur sont synchronisés dans le temps avec les premiers signaux de capteur ; et le procédé comprend une mise à jour répétée avec une deuxième fréquence du chemin sur la base de la position du véhicule de manipulation de charge, dans lequel la première fréquence est égale ou supérieure à la deuxième fréquence.

12. Produit-programme informatique comprenant des instructions qui, lorsqu'elles sont exécutées par un ordinateur, amènent l'ordinateur à mettre en œuvre le procédé selon la revendication 11.

100

130

120

180    142

110

160

170

140

FIG. 1

200

210 — OBTAIN SPATIAL MAP

220 — RECEIVE FIRST AND SECOND SENSOR SIGNALS FOR POINT CLOUDS AND IMAGES, WHEREIN THE SENSOR SIGNALS ARE SYNCHRONIZED IN TIME

230 — LOCALIZE VEHICLE AND LOAD TARGET BASED ON THE SENSOR SIGNALS

240 — PLAN PATH FROM VEHICLE TO LOAD TARGET IN THE SPATIAL MAP

250 — DETERMINE TRAJECTORY DATA SET FOR DIRECTING VEHICLE FOR LOADING/UNLOADING

FIG. 2

FIG. 3

FIG. 4

FIG. 5

FIG. 6

**REFERENCES CITED IN THE DESCRIPTION**

**Patent documents cited in the description**

- US 20220017341 A1
- EP 3995925 A1